## Europäisches Patentamt

## European Patent Office

## Office européen des brevets

(19)

(11) **EP 0 725 764 B1**

(12) **FASCICULE DE BREVET EUROPEEN**

(45) Date de publication et mention
de la délivrance du brevet:
**29.04.1998 Bulletin 1998/18**

(21) Numéro de dépôt: **95928533.9**

(22) Date de dépôt: **23.08.1995**

(51) Int Cl.⁶: **C03C 25/02**, G02B 6/44

(86) Numéro de dépôt international:
**PCT/FR95/01107**

(87) Numéro de publication internationale:
**WO 96/06055 (29.02.1996 Gazette 1996/10)**

(54) **PROCEDE D'ELABORATION D'UN REVETEMENT PROTECTEUR A BASE DE BORE AMORPHE SUR UNE FIBRE OPTIQUE, ET FIBRE OPTIQUE MUNIE D'UN TEL REVETEMENT**

VERFAHREN ZUR HERSTELLUNG EINER SCHUTZSCHICHT AUF DER BASIS VON AMORPHEN BOR AUF EINER OPTISCHEN FASER UND OPTISCHE FASER VERSEHEN MIT DIESER SCHUTZSCHICHT

METHOD FOR APPLYING A PROTECTIVE AMORPHOUS BORON-BASED COATING TO AN OPTICAL FIBER AND OPTICAL FIBER INCLUDING SUCH A COATING

(84) Etats contractants désignés:
**DE DK FR GB IT NL SE**

(30) Priorité: **25.08.1994 FR 9410283**

(43) Date de publication de la demande:
**14.08.1996 Bulletin 1996/33**

(73) Titulaire: **ALCATEL ALSTHOM COMPAGNIE GENERALE D'ELECTRICITE**
**75008 Paris (FR)**

(72) Inventeurs:
- **BREHM, Claude**
  **F-92120 Montrouge (FR)**
- **VANDENBULCKE, Lionel**
  **F-45650 Saint-Jean-Le-Blanc (FR)**

- **BONIORT, Jean-Yves**
  **F-91470 Limours (FR)**
- **LAVIGNE, Bruno**
  **F-92160 Antony (FR)**

(74) Mandataire: **Feray, Valérie et al**
**c/o ALCATEL ALSTHOM,**
**Département de Propriété Industrielle,**
**30, avenue Kléber**
**75116 Paris (FR)**

(56) Documents cités:
**EP-A- 0 149 323**   **WO-A-82/01543**
**WO-A-87/05831**   **US-A- 4 319 803**
**US-A- 5 246 746**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé d'élaboration d'un revêtement protecteur à base de bore amorphe sur une fibre optique, ainsi qu'une fibre optique munie d'un tel revêtement.

La structure classique d'une fibre optique est bien connue : une fibre optique comprend un coeur optique, servant au guidage de la majorité des ondes lumineuses, entouré d'une gaine optique, le coeur et la gaine étant tous deux constitués d'un matériau à base de silice, plus ou moins dopée selon les zones du coeur ou de la gaine. On définit ici la gaine optique au sens large, c'est-à-dire que la gaine optique comprend toutes les couches à base de silice qui entourent le coeur, quel que soit le procédé avec lequel elles ont été obtenues.

Dans certaines fibres optiques connues, la gaine optique est directement recouverte d'un revêtement de résine, destiné à éviter en partie les conséquences des microcourbures subies par la fibre, notamment lorsqu'elle est installée dans un câble. En effet, lors de son installation et de son utilisation, la fibre optique est soumise à des contraintes en flexion et en traction qui conduisent à long terme à sa fatigue mécanique, c'est-à-dire à une dégradation de ses propriétés mécaniques ayant pour conséquence une dégradation de ses performances de transmission.

Dans d'autres fibres optiques connues, destinées principalement à être utilisées dans des milieux humides (notamment dans des applications sous-marines) où la fibre optique est soumise à l'action de l'eau et des ions hydroxyles OH⁻, un revêtement protecteur est disposé directement sur la gaine optique, sous le revêtement de résine. En effet, lorsque la fibre optique est soumise à des contraintes qui entraînent sa fatigue mécanique, et provoquent par conséquent des microfissures à sa surface, son attaque par l'humidité ou les ions OH⁻ provoque la croissance des microfissures existant à sa surface, ce qui affaiblit la fibre pour aboutir à sa rupture.

De manière connue, le revêtement protecteur réalisé sur de telles fibres est en général constitué de carbone non cristallin ou turbostratique (c'est-à-dire ayant une structure telle qu'il est rendu très étanche par comparaison au carbone graphite) déposé par exemple par voie chimique en phase vapeur sur la fibre optique.

Un tel revêtement protecteur de carbone n'est toutefois pas entièrement satisfaisant : s'il assure une étanchéité suffisante de la fibre, il présente en revanche une mauvaise résistance à l'abrasion, ceci étant dû au fait qu'il ne possède pas une dureté suffisante. Il ne protège donc pas la fibre à long terme contre l'abrasion due à son frottement contre les autres fibres lorsque plusieurs d'entre elles sont installées dans un câble, ou encore à son frottement contre la paroi intérieure du câble dans lequel elle est installée. Or l'abrasion de la fibre a pour conséquence l'apparition de microfissures à sa surface, qui entraînent des risques de rupture de la fibre.

Pour éviter l'abrasion de la fibre, il faut que l'épaisseur du revêtement de résine de la fibre soit importante, en pratique au moins égale à 60 μm. Or ceci est très pénalisant lorsque l'on souhaite, comme c'est le cas actuellement, accroître la capacité des câbles à fibres optiques, de sorte qu'ils puissent contenir jusqu'à 50 à 100 fibres optiques. Ainsi, un revêtement de résine d'épaisseur importante est préjudiciable à la compacité du câble, cette compacité étant nécessaire pour pouvoir utiliser le câble dans des applications où l'espace disponible est très réduit.

Le brevet US-4 319 803 propose de réaliser le revêtement protecteur en différents matériaux, dont le bore amorphe, ce qui devrait permettre d'éliminer les inconvénients mentionnés ci-dessus.

Ce brevet ne propose cependant aucune méthode pour élaborer ce revêtement protecteur de bore amorphe sur la fibre optique.

Le but de la présente invention est donc de mettre au point un procédé d'élaboration d'un revêtement protecteur à base de bore amorphe sur une fibre optique.

La présente invention propose à cet effet un procédé d'élaboration d'un revêtement protecteur à base de bore amorphe sur une fibre optique comprenant un coeur optique entouré d'une gaine optique, tous deux en un matériau à base de silice, **caractérisé en ce que** l'apport de bore à la surface de ladite fibre optique est effectué par voie chimique à partir de la phase vapeur à une température comprise entre 1050 et 1250°C, par réduction du chlorure de bore $BCl_3$ par l'hydrogène $H_2$.

De façon tout à fait surprenante, il a été constaté que, pour les températures comprises entre 1050 et 1250°C, la réduction de $BCl_3$ par $H_2$ s'accompagne d'une interaction en phase solide limitée entre le bore formé et la silice de la fibre $SiO_2$, qui conduit à une bonne adhérence de la couche de bore déposée, alors que :

- aux températures inférieures, on observe une interaction entre la phase gazeuse contenant le chlorure de bore et la surface solide de silice, qui conduit à une corrosion importante de la surface de la fibre et à une adhérence très mauvaise de la couche de bore amorphe sur la fibre.
- aux températures supérieures, l'interaction en phase solide entre le bore et la silice devient très importante, ce qui conduit à la formation en surface d'une couche de forte épaisseur comprenant de l'oxyde de bore $B_2O_3$, également très préjudiciable à l'adhérence du bore amorphe sur la fibre.

La présente invention repose donc sur les constatations surprenantes précédentes, qui ont permis de définir un intervalle de températures dans lequel il existe une interaction limitée entre le bore et la silice, qui n'entraîne la formation que d'une couche d'interaction entre le bore et la silice de très faible épaisseur, favorisant l'adhérence de la couche de bore amorphe sur la fibre.

Par ailleurs, de façon également tout à fait surprenante, on a constaté que la dureté de la couche de bore amorphe ainsi déposée est très supérieure à celle d'une couche de bore amorphe déposée sur un substrat inerte vis-à-vis du bore, c'est-à-dire qui ne réagit pas avec le bore, contrairement à la silice. Ainsi, la dureté Vickers du bore amorphe déposé sur un substrat inerte est de l'ordre de 3000 à 4000 kg/mm$^2$, alors que celle du bore déposé selon l'invention sur une fibre de silice varie entre 4700 et 7800 kg/mm$^2$ (à titre indicatif, la dureté Vickers du diamant naturel est de 9000 kg/mm$^2$). Ceci est dû au fait que, aux températures comprises entre 1050 et 1250°C, l'interaction entre le bore et la silice, quoique limitée, est tout à fait bénéfique car elle entraîne, de manière tout à fait inattendue, un dopage de la couche de bore amorphe par le silicium provenant de la silice. C'est ce phénomène qui semble être à l'origine de la dureté très importante de la couche de bore déposée.

En outre, on sait que, pour que le bore cristallise, il faut le maintenir pendant une durée t à température élevée, cette durée t diminuant avec la température. Or on a constaté qu'avec des températures comprises entre 1050 et 1250°C, lorsque la fibre défile dans le réacteur où est effectué le dépôt de bore à une vitesse au moins égale à 100 m/min (ce qui correspond à une vitesse classique de fibrage), le temps pendant lequel la fibre revêtue de bore reste dans le réacteur est inférieur à t, de sorte que l'on favorise, à ces températures, le dépôt d'une couche de bore non cristallisé, c'est-à-dire amorphe.

La vitesse de croissance de la couche de bore amorphe sur la fibre peut être au moins égale à 0,10 µm/s, et de préférence voisine d'environ 0,25 µm/s. En imposant cette limite inférieure, par le choix adapté des débits des différents réactifs compte tenu de la vitesse de défilement de la fibre, on limite la durée de l'opération de dépôt de bore amorphe. ce qui limite la réactivité du bore avec la silice et permet d'obtenir une adhérence et une dureté satisfaisantes. En outre, une vitesse de croissance supérieure à 0,10 µm/s garantit que le bore déposé n'a pas le temps de cristalliser à la température de la réaction de dépôt.

Dans l'intervalle des températures comprises entre 1100°C et 1200°C, on obtient un résultat optimal du procédé selon l'invention.

De manière avantageuse, le rapport R entre la concentration molaire de chlorure de bore et celle d'hydrogène est compris entre 1/20 et 1/4. C'est dans cet intervalle que l'on observe à la fois une dureté Vickers particulièrement importante de la couche de bore déposée, notamment supérieure à 4700 kg/mm$^2$ (la dureté Vickers s'accroissant avec R), et un faible niveau de réactivité du bore avec la silice (la réactivité du bore avec la silice s'accroissant avec R), permettant de limiter l'interaction entre le bore et la silice à l'obtention de la couche d'interaction de faible épaisseur mentionnée plus haut.

Selon une caractéristique additionnelle de la présente invention, l'élaboration du revêtement de bore est effectuée en ligne avec le fibrage, et la vitesse de défilement de la fibre est au moins égale à 100 m/min.

Pour obtenir une couche de bore amorphe, c'est-à-dire non cristallin, il est nécessaire que la vitesse de renouvellement des réactifs gazeux $BCl_3$ et $H_2$ dans le réacteur de dépôt soit élevée. Ceci est obtenu de manière avantageuse dans le cas de la présente invention grâce au fait que la fibre défile à grande vitesse dans ce réacteur, c'est-à-dire à une vitesse au moins égale à 100 m/min.

En outre, la pression de la phase gazeuse est avantageusement voisine de la pression atmosphérique, ce qui permet d'effectuer l'élaboration du revêtement protecteur de bore en ligne avec le fibrage.

Enfin, selon une caractéristique très avantageuse de l'invention, on peut ajouter un réactif gazeux précurseur du silicium dans le mélange initial de réactifs gazeux, tel que $SiH_4$, $SiH_3Cl$, $SiH_2Cl_2$, $SiHCl_3$ ou $SiCl_4$ ; ces composés ont dans l'ordre donné une réactivité décroissante. Leur ajout permet de favoriser le dopage de la couche de bore amorphe par le silicium, et donc d'obtenir une grande dureté de la couche déposée. Par ailleurs, la présence de composés du silicium dans le mélange gazeux permet de limiter et de contrôler l'interaction initiale de la phase gazeuse avec la silice de la fibre. L'adhérence du dépôt de bore sur la fibre est alors optimale.

La présente invention concerne également une fibre optique comprenant un coeur optique entouré d'une gaine optique, tous deux en un matériau à base de silice, et un revêtement protecteur à base de bore amorphe déposé sur ladite gaine optique, **caractérisée en ce que** ledit revêtement protecteur comporte :

- une couche intermédiaire provenant de l'interaction du bore avec la silice, en contact avec ladite gaine optique,
- une couche de bore amorphe au-dessus de ladite couche intermédiaire.

De manière additionnelle, la couche de bore peut être dopée avec du silicium.

D'autres caractéristiques et avantages de la présente invention apparaîtront dans la description suivante d'un procédé selon l'invention, donnée à titre illustratif et nullement limitatif.

Dans les figures suivantes :

- la figure 1 est une vue en coupe transversale d'une fibre optique selon l'invention, munie d'un revêtement protecteur à base de bore amorphe,
- la figure 2 est un schéma simplifié d'un dispositif de fibrage comprenant un réacteur de dépôt de bore pour la mise en oeuvre du procédé selon l'invention.

Dans ces figures, les éléments communs portent les mêmes numéros de référence.

On rappelle au préalable que le bore amorphe est du bore non cristallin, notamment caractérisé par l'absence de joints de grains dans sa structure, ce qui lui confère une forte résistance à la rupture et une bonne étanchéité. Il présente donc les mêmes avantages que le carbone non cristallin pour ce qui est de son étanchéité. En revanche, il présente une dureté nettement supérieure à celle du carbone non cristallin, qui confère à la fibre optique une résistance à l'abrasion améliorée, de sorte que l'épaisseur du revêtement protecteur de résine peut être réduite sensiblement par rapport au cas où la couche protectrice est réalisée à base de carbone, ce revêtement de résine pouvant même être supprimé.

On rappelle que les structures non cristallines sont caractérisées par une désorganisation de la matière qui les constitue. Un taux de 1% de grains cristallisés correspond aux traces de cristallisation dont l'apparition est impossible à éviter, et qui sont donc présentes au titre des imperfections de structure de la couche de bore amorphe, sans conséquences notables sur les propriétés recherchées de la couche protectrice. Avec un tel taux de grains cristallisés, on peut dire que le bore déposé est "essentiellement" non cristallin, ou amorphe.

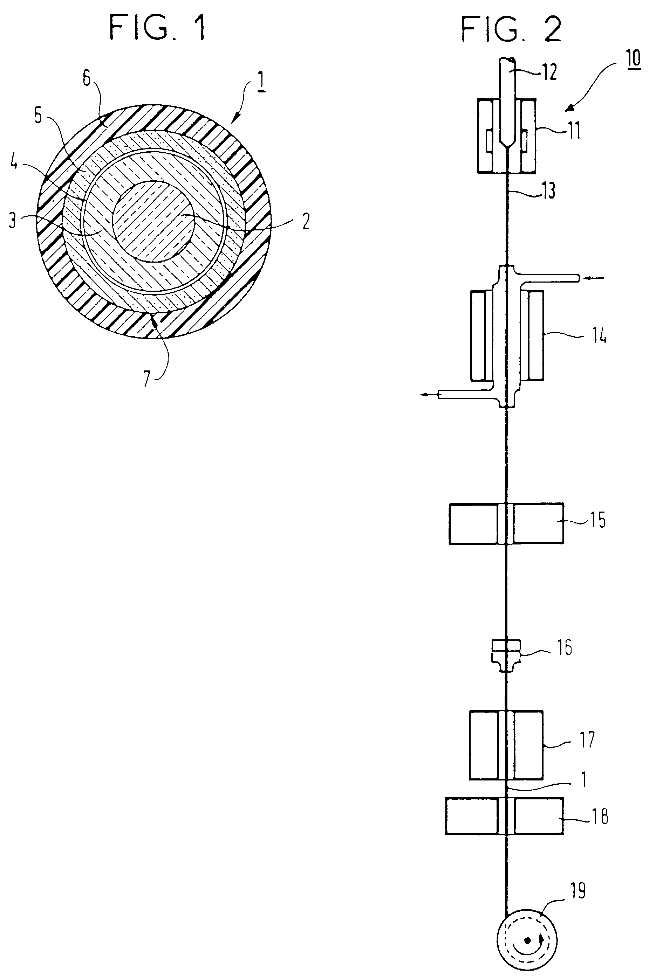

On voit en figure 1 une fibre 1 selon l'invention comportant, disposés coaxialement de l'intérieur vers l'extérieur :

- un coeur optique 2 à base de silice, servant au guidage de la majorité des ondes lumineuses,
- une gaine optique 3 également à base de silice,
- une couche intermédiaire 4 d'interaction entre le bore et la silice, de très faible épaisseur,
- une couche 5 de bore amorphe,
- un revêtement protecteur optionnel de résine 6 d'épaisseur inférieure à 50 μm, et de préférence voisine de 10 μm.

Le revêtement protecteur 7 de la fibre 1 selon l'invention comporte la couche intermédiaire 4 et la couche 5. Il a une épaisseur comprise entre 10 et 200 nm, et de préférence voisine de 100 nm.

Comme cela a été expliqué plus haut, la couche 5 peut être dopée avec du silicium, lorsque la température choisie pour l'élaboration du revêtement 7 est telle que ce dopage est favorisé. De plus, par utilisation d'un réactif précurseur du silicium lors du procédé d'élaboration, le dopage de la couche 5 en silicium est favorisé.

Il est bien évident que le coeur 2 et la gaine optique 3 peuvent avoir une structure simple classique, c'est-à-dire comporter chacun une seule couche d'indice de réfraction constant, ou bien une structure plus complexe, c'est-à-dire être constitué chacun de plusieurs couches superposées, et avoir chacun un indice de réfraction variable. On ne décrira pas ici plus en détail la structure du coeur ou de la gaine optique, car cela n'entre pas dans le cadre de la présente invention. Toutefois, on comprend bien que l'invention peut être appliquée à n'importe laquelle des structures de fibres connues.

Le revêtement protecteur 7 de bore amorphe assure la protection mécanique de la fibre, conférant ainsi à cette dernière une résistance à l'abrasion accrue permettant donc l'utilisation de la fibre 1 dans des câbles optiques de grande capacité et de grande compacité, l'épaisseur du revêtement de résine pouvant pratiquement être diminuée de moitié par rapport à ce qui est nécessaire lorsque l'on utilise un revêtement protecteur de carbone, voire même être supprimée. Le revêtement 7 assure en outre une étanchéité comparable à celle assurée par le revêtement de carbone.

On va maintenant décrire, en relation avec la figure 2, qui montre de manière schématique un dispositif 10 permettant la fabrication de la fibre 1 de la figure 1, un procédé de dépôt selon l'invention.

Le dispositif 10 comprend. disposés les uns à la suite des autres au sein d'une installation verticale de fibrage :

- un four de fibrage 11 dans lequel est fibrée de manière classique et bien connue une préforme 12 présentant un coeur optique (non représenté) de composition identique et de diamètre supérieur à ceux du coeur 2, entouré d'une gaine optique (non représentée) de composition identique et d'épaisseur supérieure à celles de la gaine optique 3, le rapport des diamètres de la gaine optique au coeur optique de la préforme 12 étant identique au rapport des diamètres de la gaine optique 3 et du coeur optique 2,
- un réacteur 14 pour l'élaboration du revêtement 7,
- des moyens de contrôle 15 du diamètre de la fibre en sortie du réacteur 14,
- des moyens 16, optionnels, d'enduction de résine, pour réaliser le revêtement de résine 6 sur le revêtement de bore 7,
- un dispositif 17 de polymérisation par rayonnement ultraviolet du revêtement de résine 6,
- des moyens 18 de contrôle du diamètre final de la fibre 1 obtenue,
- une bobine 19 d'enroulement de la fibre 1 terminée.

On n'a représenté qu'un seul réacteur 14 pour le dépôt de bore. Toutefois, lorsque cela est nécessaire, le dépôt de bore peut être effectué dans plusieurs réacteurs disposés les uns à la suite des autres le long de la ligne de fibrage.

Selon l'invention, on effectue pour obtenir le revêtement 7 à base de bore sur la fibre optique nue 13, une réaction de réduction du chlorure de bore gazeux par l'hydrogène gazeux, selon l'équation suivante :

$$2BCl_3 + 3H_2 \rightarrow 2B + 6HCl$$

Le revêtement de bore est ainsi obtenu par voie chimique en phase vapeur.

Selon l'invention, il est essentiel d'effectuer cette réduction à une température comprise entre 1050 et 1250°C, et de préférence entre 1100 et 1200°C, et ce pour les raisons exposées en détail plus haut. La réduction a par exemple lieu à 1150°C.

La pression de la phase gazeuse des réactifs est de préférence voisine de la pression atmosphérique, notamment lorsque le dépôt est effectué en ligne avec le fibrage, ce qui permet d'utiliser un réacteur ouvert autorisant l'entrée et la sortie de la fibre. La protection de la phase gazeuse vis-à-vis de l'air extérieur peut être assurée simplement à l'aide de sas d'entrée et de sortie de la fibre (non représentés) dans lesquels circule un gaz inerte à une pression légèrement supérieure à la pression atmosphérique.

Afin d'obtenir une grande dureté du revêtement de bore 7, tout en évitant une forte interaction avec le bore conduisant à la formation d'oxyde de bore $B_2O_3$, le rapport R de la concentration molaire de chlorure de bore sur celle d'hydrogène est choisi entre 1/20 et 1/4, par exemple égal à 1/4.

Pour obtenir une couche 5 de bore amorphe, il est préférable que la vitesse de transfert du bore en phase gazeuse vers la surface de la fibre nue 13 soit élevée. En effet, c'est cette vitesse élevée d'apport du bore à la surface de la fibre qui assure la formation d'une couche de bore essentiellement non cristallin. Cette vitesse élevée peut être obtenue par un renouvellement rapide des réactifs au niveau de la surface de la fibre. Un renouvellement rapide des réactifs à la surface de la fibre, qui s'accompagne d'une évacuation rapide des produits gazeux de la réaction de dépôt, c'est-à-dire l'acide chlorhydrique HCl dans le cas des réactifs $BCl_3$ et $H_2$, est obtenu à la fois grâce au fait que la fibre défile à grande vitesse dans le réacteur 14, et grâce au renouvellement de la phase gazeuse assuré par l'écoulement des gaz entre l'entrée et la sortie du réacteur 14. Ainsi, la vitesse de défilement de la fibre dans le réacteur sera de préférence au moins égale à 100 m/min, ce qui correspond à une vitesse de fibrage classique ; par conséquent, l'élaboration du revêtement de bore amorphe en ligne avec le fibrage ne ralentit pas la fabrication de la fibre optique.

Avec une vitesse de défilement de la fibre 13 de 200 m/min dans le réacteur 14, il est possible de déposer, avec une vitesse de croissance du revêtement de bore de 0.25 $\mu$m/s (on peut obtenir une telle vitesse de croissance en choisissant un débit de chlorure de bore de 0,5 l/min et un débit d'hydrogène de 5 l/min), un revêtement de bore 7 d'épaisseur environ égale à 75 nm en 0,3 s.

On peut avantageusement ajouter à la phase gazeuse un réactif précurseur du silicium tel que $SiH_4$, $SiH_3Cl$, $SiH_2Cl_2$, $SiHCl_3$ ou $SiCl_4$.

Le dispositif 10 décrit en relation avec la figure 2 est un dispositif de fibrage classique, dans lequel on a ajouté un réacteur 14 de dépôt du revêtement de bore 7. Certains des éléments du dispositif 10 sont optionnels, comme les moyens 15 et 18 de contrôle de diamètre.

En outre, les moyens de revêtement de résine peuvent être quelconques, et éventuellement, le revêtement de résine peut ne pas être réalisé en ligne.

Bien évidemment, la présente invention n'est pas limitée au mode de réalisation qui vient d'être décrit.

En particulier, les valeurs numériques données pour les caractéristiques de la couche de bore et le procédé de dépôt de cette dernière ne le sont qu'à titre indicatif.

D'autre part, une fibre optique selon l'invention peut comprendre, au-dessus de la couche de bore, d'autres revêtements en plus du revêtement de résine, comme notamment des revêtements colorés d'identification.

## Revendications

1. Procédé d'élaboration d'un revêtement protecteur à base de bore amorphe sur une fibre optique comprenant un coeur optique entouré d'une gaine optique, tous deux en un matériau à base de silice, **caractérisé en ce que** l'apport de bore à la surface de ladite fibre optique est effectué par voie chimique à partir de la phase vapeur à une température comprise entre 1050 et 1250°C, par réduction du chlorure de bore $BCl_3$ par l'hydrogène $H_2$.

2. Procédé selon la revendication 1 caractérisé en ce que l'apport de bore est tel qu'il se forme sur ladite gaine optique :

   - une couche intermédiaire provenant de l'interaction du bore avec la silice, en contact avec ladite gaine optique,
   - une couche de bore amorphe au-dessus de ladite couche intermédiaire.

3. Procédé selon l'une des revendications 1 ou 2 caractérisé en ce que la température est comprise entre 1100 et 1200°C.

4. Procédé selon l'une des revendications 1 à 3 caractérisé en ce que le rapport entre la concentration molaire de chlorure de bore et celle d'hydrogène est compris entre 1/20 et 1/4.

5. Procédé selon l'une des revendications 1 à 4 caractérisé en ce que la pression de la phase gazeuse est voisine de la pression atmosphérique.

6. Procédé selon l'une des revendications 1 à 5 caractérisé en ce que l'élaboration dudit revêtement à base de bore amorphe est effectuée en ligne avec le fibrage de ladite fibre optique, ladite fibre défilant à une vitesse au moins égale à 100 m/min durant ledit dépôt.

7. Procédé selon l'une des revendications 1 à 6 caractérisé en ce que la vitesse de croissance dudit revêtement à base de bore amorphe à la surface de ladite fibre est au moins égale à 0,10 $\mu$m/s.

8. Procédé selon l'une des revendications 1 à 7 caractérisé en ce que l'on ajoute au mélange initial de réactifs un précurseur gazeux du silicium choisi parmi SiH$_4$, SiH$_3$Cl, SiH$_2$Cl$_2$, SiHCl$_3$ et SiCl$_4$.

9. Procédé selon l'une des revendications 1 à 8 caractérisé en ce que ledit revêtement de bore a une épaisseur comprise entre 10 et 200 nm, et de préférence de l'ordre de 100 nm.

10. Fibre optique comprenant un coeur optique entouré d'une gaine optique, tous deux en un matériau à base de silice, et un revêtement protecteur à base de bore amorphe déposé sur ladite gaine optique, **caractérisée en ce que** ledit revêtement protecteur comporte :

   - une couche intermédiaire provenant de l'interaction du bore avec la silice, en contact avec ladite gaine optique,
   - une couche de bore amorphe au-dessus de ladite couche intermédiaire.

11. Fibre optique selon la revendication 10 caractérisée en ce que ladite couche de bore est dopée avec du silicium.


**Patentansprüche**

1. Verfahren zur Herstellung einer Schutzschicht auf der Basis von amorphem Bor auf einer optischen Faser, die einen von einer optischen Umhüllung umgebenen optischen Kern, beide aus einem Material auf der Basis von Siliciumdioxid, umfasst, **dadurch gekennzeichnet**, dass die Zufuhr von Bor zur Oberfläche der optischen Faser auf chemischem Wege, ausgehend von der Dampfphase bei einer Temperatur zwischen 1050 und 1250°C, durch Reduktion von Borchlorid BCl$_3$ durch Wasserstoff H$_2$ bewirkt wird.

2. Verfahren nach Anspruch 1, dadurch gekennzeichnet, dass die Zufuhr von Bor so ist, dass sich auf der optischen Umhüllung bildet:

   - eine von der Wechselwirkung des Bors mit dem Siliciumdioxid stammende Zwischenschicht in Kontakt mit der optischen Umhüllung,
   - eine Schicht aus amorphem Bor über der Zwischenschicht.

3. Verfahren nach einem der Ansprüche 1 oder 2, dadurch gekennzeichnet, dass die Temperatur zwischen 1100 und 1200°C liegt.

4. Verfahren nach einem der Ansprüche 1 bis 3, dadurch gekennzeichnet, dass das Verhältnis zwischen der molaren Konzentration des Borchlorids und der des Wasserstoffs zwischen 1/20 und 1/4 liegt.

5. Verfahren nach einem der Ansprüche 1 bis 4, dadurch gekennzeichnet, dass der Druck der Gasphase nahe dem atmosphärischen Druck liegt.

6. Verfahren nach einem der Ansprüche 1 bis 5, dadurch gekennzeichnet, dass die Herstellung der Schicht auf der Basis von amorphem Bor direkt mit dem Ziehen der optischen Faser ausgeführt wird, wobei die Faser während der Abscheidung mit einer Geschwindigkeit von wenigstens 100 m/min abläuft.

7. Verfahren nach einem der Ansprüche 1 bis 6, dadurch gekennzeichnet, dass die Wachstumsgeschwindigkeit der Schicht auf der Basis von amorphem Bor an der Oberfläche der Faser wenigstens 0,10 µm/s beträgt.

8. Verfahren nach einem der Ansprüche 1 bis 7, dadurch gekennzeichnet, dass dem Ausgangsgemisch der Reagenzien eine gasförmige Vorstufe von Silicium zugegeben wird, die aus SiH$_4$, SiH$_3$Cl, SiH$_2$Cl$_2$, SiHCl$_3$ oder SiCl$_4$ ausgewählt ist.

9. Verfahren nach einem der Ansprüche 1 bis 8, dadurch gekennzeichnet, dass die Borschicht eine Dicke zwischen 10 und 200 nm und vorzugsweise in der Größenordnung von 100 nm besitzt.

10. Optische Faser, die einen von einer optischen Umhüllung umgebenen optischen Kern, beide aus einem Material auf der Basis von Siliciumdioxid, und eine auf der optischen Umhüllung abgeschiedene Schutzschicht auf der Basis von amorphem Bor umfasst, dadurch gekennzeichnet, dass die Schutzschicht aufweist:

   - eine von der Wechselwirkung des Bors mit dem Siliciumdioxid stammende Zwischenschicht in Kontakt mit der optischen Umhüllung,
   - eine Schicht aus amorphem Bor über der Zwischenschicht.

11. Optische Faser nach Anspruch 10, dadurch gekennzeichnet, dass die Borschicht mit Silicium dotiert ist.


**Claims**

1. A method of applying an amorphous boron-based protective coating to an optical fiber comprising an optical core enclosed in optical cladding, both made of a silica-based material,

said method being characterized in that the boron is applied to the surface of said optical fiber chemically from the vapor phase at a temperature lying in the range 1050°C to 1250°C, by reducing boron chloride $BCl_3$ by means of hydrogen $H_2$.

2. A method according to claim 1, characterized in that when boron is applied it forms on said optical cladding:

an intermediate layer in contact with said optical cladding and resulting from interaction between boron and silica; and
an amorphous boron layer on top of said intermediate layer.

3. A method according to claim 1 or 2, characterized in that the temperature lies in the range 1100°C to 1200°C.

4. A method according to any one of claims 1 to 3, characterized in that the ratio of the molar concentration of boron chloride to that of hydrogen lies in the range 1/20 to 1/4.

5. A method according to any one of claims 1 to 4, characterized in that the pressure of the gaseous phase is in the vicinity of atmospheric pressure.

6. A method according to any one of claims 1 to 5, characterized in that said amorphous boron-based coating is applied in line with fiber-drawing said optical fiber, the running speed of said fiber being not less than 100 m/min during said deposition.

7. A method according to any one of claims 1 to 6, characterized in that the growth rate of said amorphous boron-based coating on the surface of said fiber is not less than 0.10 $\mu$m/s.

8. A method according to any one of claims 1 to 7, characterized in that a gaseous precursor of silicon chosen from $SiH_4$, $SiH_3Cl$, $SiH_2Cl_2$, $SiHCl_3$, and $SiCl_4$, is added to the initial mix of reagents.

9. A method according to any one of claims 1 to 8, characterized in that the thickness of said boron coating lies in the range 10 nm to 200 nm, and is preferably about 100 nm.

10. An optical fiber comprising an optical core enclosed in optical cladding, both made of a silica-based material, and an amorphous boron-based protective coating deposited on said optical cladding,

said optical fiber being characterized in that said protective coating includes:
an intermediate layer in contact with said optical cladding resulting from interaction between boron and silica; and
an amorphous boron layer on top of said intermediate layer.

11. An optical fiber according to claim 10, characterized in that said boron layer is doped with silicon.

# FIG. 1

# FIG. 2